# EUROPÄISCHE PATENTSCHRIFT

(11) **EP 3 804 001 B1**
(45) Veröffentlichungstag und Bekanntmachung des Hinweises auf die Patenterteilung: **28.08.2024**
(21) Anmeldenummer: 19727580.3
(22) Anmeldetag: 09.05.2019
(51) Int. Cl.: H01M 10/643, H01M 10/617, H01M 10/6567, H01M 50/213

(54) **TEMPERIERVORRICHTUNG FÜR EINZELNE, ZU EINEM MODUL ZUSAMMENGESETZTE BATTERIEZELLEN**
TEMPERATURE-CONTROL DEVICE FOR INDIVIDUAL BATTERY CELLS WHICH ARE COMBINED INTO A MODULE
DISPOSITIF DE RÉGULATION THERMIQUE POUR DES CELLULES E BATTERIE INDIVIDUELLES ASSEMBLÉES EN UN MODULE

(30) Priorität: 08.06.2018 AT 504572018
(43) Veröffentlichungstag der Anmeldung: 14.04.2021
(73) Patentinhaber: John Deere Electric Powertrain LLC, Moline, IL 61265 (US)
(72) Erfinder: KREISEL, Philipp, 4240 Freistadt (AT); KREISEL, Johann, 4240 Freistadt (AT); KREISEL, Markus, 4240 Freistadt (AT)
(74) Vertreter: Hübscher & Partner Patentanwälte GmbH
(86) Internationale Anmeldenummer: PCT/AT2019/050018
(87) Internationale Veröffentlichungsnummer: WO 2019/232557

(56) Entgegenhaltungen:
- DE-U1- 202016 107 089
- US-A1- 2009 325 052
- DATABASE WPI Week 201322, Derwent World Patents Index; AN 2013-D47864, XP002792621

## Beschreibung

### Technisches Gebiet

Die Erfindung bezieht sich auf eine Temperiervorrichtung für einzelne, zu einem Modul zusammengesetzte Batteriezellen, mit einem Grundkörper, der zum umfangsseitigen Umschließen der Batteriezellen zwei gegenüberliegende, bezüglich je einer Fügeachse paarweise gegenüberliegende Durchtrittsöffnungen aufweisende Dichtelemente umfasst und einen quer zu den Fügeachsen verlaufenden Strömungskanal für ein Temperierfluid bildet.

Batteriezellen, insbesondere auf Basis von Lithium-Ionen Technologie weisen eine stark von der Betriebstemperatur abhängige Lebensdauer auf, wobei bereits Temperaturunterschiede von 1 bis 3 Grad Celsius zu einer signifikanten Alterung führen können. Gerade bei Stoßbelastungen solcher Batteriezellen ist es daher wesentlich, die zufolge der chemischen Vorgänge auftretende Wärmeenergie rasch abzuführen, um eine lange Betriebsdauer zu ermöglichen. Der Einsatz von Fluidtemperiervorrichtungen hat sich dabei nicht zuletzt zur Verhinderung einer etwaigen Brandgefahr als sehr vorteilhaft erwiesen, allerdings lässt sich mit solchen Vorrichtungen in der Regel nur ein träges Regelungsverhalten erreichen, weil Strömungsverwirbelungen und dadurch resultierende Staudrücke raschere Strömungsgeschwindigkeiten und einen damit verbundenen Volumendurchsatz zu verhindern. Dies wird zusätzlich durch den Einsatz leicht flüchtiger Temperierfluide erschwert, für die eine sichere Abdichtung erforderlich ist.

### Stand der Technik

Aus dem Stand der Technik sind Temperiervorrichtungen für einzelne, zu einem Modul zusammengesetzte Batteriezellen in einem Batteriesystem, mit einem zwei gegenüberliegende Dichtelemente umfassenden und einen Flüssigkeitsraum für das der Vorrichtung zugeführte Temperierfluid bildenden Grundkörper bekannt. (WO 2017/067923 A1). Dabei weisen die Dichtelemente zum umfangsseitigen Umschließen der Batteriezellen bezüglich je einer Fügeachse paarweise gegenüberliegende Durchtrittsöffnungen auf, sodass die einzelnen Batteriezellen teilweise vom Temperierfluid umströmt werden, während die Anode und die Kathode zur elektrischen Kontaktierung außerhalb des Grundkörpers liegen. Ein Nachteil der aus der WO 2017/067923 A1 bekannten Temperiervorrichtungen ist daher, dass äußerst geringe Fertigungstoleranzen der Dichtelemente sowie der Dichtungen eingehalten werden müssen, um nach erfolgter Assemblierung eine gegenüber einem erhöhten Systemdruck zufolge der höheren Strömungsgeschwindigkeit des Temperierfluids ausreichende Dichtheit des Grundkörpers zu erreichen und somit ein Austreten des Temperierfluids aus dem Grundkörper zu vermeiden, womit allerdings ein enormer fertigungstechnischer Aufwand einhergeht.

Eine weitere Temperiervorrichtung mit zwei gegenüberliegenden Dichtelementen ist aus der DE 20 2016 107089 U1 bekannt. 1

### Darstellung der Erfindung

Der Erfindung liegt somit die Aufgabe zugrunde, eine Temperiervorrichtung der eingangs geschilderten Art so auszugestalten, dass bei geringerem Fertigungsaufwand gleichzeitig eine erhöhte Dichtheit der Vorrichtung auch bei größeren Strömungsgeschwindigkeiten des Temperierfluids erreicht wird.

Die Erfindung löst die gestellte Aufgabe dadurch, dass die Dichtelemente zwei einander gleichende Formteile sind, die punktsymmetrisch zueinander ausgerichtet und über je eine Auflagefläche miteinander verbunden den Grundkörper bilden, wobei an die Auflagefläche grundkörperinnenseitig eine, einen Dichtungsausgleichsbereich aufweisende Aufnahmenut anschließt.

Dadurch, dass die beiden Dichtelemente als beispielsweise im Spritzgussverfahren mit der selben Werkzeugkavität gefertigte Gleichteile ausgebildet sind, weisen diese im Wesentlichen idente Bauteiltoleranzen auf, weshalb eine gesonderte Abstimmung zweier unterschiedlicher Dichtelemente aufeinander entfallen kann. Üblicherweise würde zur Abdichtung zweier solcher Dichtelemente eine gemeinsame, umlaufende Randdichtung vorgesehen werden, die allerdings einen hohen Fertigungsaufwand beim Fügen der beiden Dichtelemente mit sich bringen würde, weil in beiden Dichtelementen Aufnahmenuten für die gemeinsame Randdichtung vorgesehen sind und die zur Abdichtung erforderliche Flächenpressung zwischen der Randdichtung und den jeweiligen Aufnahmenutwänden nur durch eine exakte Ausrichtung der gemeinsamen Randdichtung zu den jeweiligen Aufnahmenuten sichergestellt werden könnte. Erfindungsgemäß ist daher vorgesehen, dass beide Dichtelemente je eine gesonderte, umlaufende Randdichtung aufweisen, die in die jeweilige Aufnahmenut eingesetzt wird. Weil es dadurch beim Fügen der Dichtelemente zu einem Aufeinanderpressen der beiden Randdichtungen aufeinander kommt, was der Fachmann zur Vermeidung einer Leckage zufolge einer unerwünschten Verformung der Randdichtungen regelmäßig vermeiden würde, ist erfindungsgemäß in der grundkörperinnenseitig an die Auflagefläche anschließenden Aufnahmenut ein Dichtungsausgleichsbereich vorgesehen, der im nicht assemblierten Zustand frei bleibt und eine vordefinierte Verformung der Randdichtungen ermöglicht. Erst beim Fügen der beiden Dichtelemente zueinander und beim Erreichen einer ausreichenden Flächenpressung wird der Dichtungsausgleichsbereich wenigstens teilweise durch die jeweilige Randdichtung ausgefüllt. Wird der Dichtungsausgleichsbereich auf der der Auflagefläche abgewandten Seite der Aufnahmenut vorgesehen, so kann zudem vermieden werden, dass die, die Auflageflächen bildenden Seitenwände der Dichtelemente zur Grundkörperaußenseite hin verformt werden und nicht mehr zueinander fluchtend abschließen, was das Erreichen einer vordefinierten Flächenpressung der Randdichtungen unmöglich machen würde.

Um auch bei einem im Verhältnis zur Randdichtung größeren Dichtungsausgleichsbereich eine zuverlässige Abdichtung zu ermöglichen, wird vorgeschlagen, dass die Aufnahmenut eine gegenüber dem Nutgrund hervortretende Positionierstufe für eine Randdichtung aufweist und dass der oberhalb der Positionierstufe freibleibende Nutbereich den Dichtungsausgleichsbereich bildet. Dadurch wird eine ungewünschte Verlagerung der Dichtung innerhalb der Aufnahmenut verhindert, weil die Randdichtung im Bereich des Nutgrundes zwischen einer Nutwand und der Positionierstufe quer zu ihrer Längsrichtung festgelegt wird, während eine elastische Verformung des Randdichtungskörpers in den oberhalb der Positionierstufe gebildeten Dichtungsausgleichsbereich weiterhin möglich bleibt. Darüber hinaus bedingt die elastische Verformung auch eine Anpressung der Randdichtung an die Positionierstufe, sodass die Abdichtung zwischen der Randdichtung und der Aufnahmenut selbst verbessert wird.

Eine besonders vorteilhafte Dichtwirkung bei gleichzeitiger Reduktion von Eigenspannungen ergibt sich, wenn die Randdichtung einen, zur Auflagefläche hin unter diese abfallenden Dichtwulst aufweist. Zufolge dieser Merkmale bildet sich auch ein zweiter, grundkörperaußenseitig an die Aufnahmenut anschließender Dichtungsausgleichsbereich, was einen fluchtenden Übergang der die Auflageflächen bildenden Seitendwände der beiden Dichtelemente auch dann ermöglicht, wenn ein gegenüber der Auflageflächen stärker hervortretender Randdichtungswulst zur Erreichung einer höheren Flächenpressung vorgesehen wird.

Um eine Beschädigung von in Umfangsrichtung der Durchtrittsöffnungen verlaufenden Durchtrittsdichtungen insbesondere beim Fügen der Batteriezellen zu vermeiden, können die Dichtelemente je zwischen drei aneinandergrenzenden Durchtrittsöffnungen grundkörperinnenseitig vorragende und in Richtung der Fügeachsen verlaufende Stützstifte aufweisen, die im Übergangsbereich zu den Durchtrittsöffnungen einen Stützkörper für die in Umfangsrichtung der Durchtrittsöffnungen verlaufenden Durchtrittsdichtungen bilden. Einerseits verhindern die im assemblierten Zustand aufeinander aufliegenden Stützstifte eine Verformung der Dichtelemente bei einer durch das Einsetzen einer Batteriezelle auftretenden Kraftbelastung in Richtung der Fügeachsen und eine damit einhergehende Verwindung der Durchtrittsdichtungen. Andererseits bilden die Stützkörper eine definierte Auflagefläche für die Durchtrittsdichtungen, sodass diese vor dem Assemblieren eine definierte Lage aufweisen, sich während des Assemblierens und nach dem Einsetzen der Batteriezellen nicht gegenseitig beeinflussen und damit eine vorgegebene Flächenpressung gegenüber den eingesetzten Batteriezellen erreichen. Durch die Kombination beider Merkmale wird somit eine Beschädigung der Durchtrittsdichtungen beim Assemblieren vermieden, weil die Durchtrittsdichtungen nicht ungleichmäßig in die Aufnahmebereiche für die einzusetzenden Batteriezellen ragen und damit beim Assemblieren abgeschert oder gar abgerissen werden können. Um durch die Stützstifte die Strömungseigenschaften des Temperierfluids nicht unnötig zu verschlechtern, können diese lediglich im Bereich der zufolge des vorgegebenen Fügeschemas zuerst mit Batteriezellen gefügten Durchtrittsöffnungen angeordnet sein. Selbstverständlich können allerdings auch dort Stützkörper angeordnet werden, wo in diesem Fall keine Stützstifte vorgesehen sind.

Besonders vorteilhafte Fertigungsbedingungen ergeben sich, wenn die Randdichtung mit der Aufnahmenut im Mehrkomponenten-Spritzgussverfahren verbunden ist. Beispielsweise kann die Randdichtung als Weichkomponente ein thermoplastisches Elastomer sein, während die Aufnahmenut im Sinne einer Hartkomponente als Polyoxymethylen ausgebildet sein kann. Dadurch ergibt sich auch unabhängig von der Flächenpressung eine Abdichtung zwischen der Aufnahmenut und der darin eingespritzten Randdichtung.

Für noch bessere Fertigungsbedingungen sowie eine verbesserte Abdichtung der Batteriezellen können auch die Durchtrittsdichtungen mit den Stützkörpern im Mehrkomponenten-Spritzgussverfahren verbunden sein. Zufolge dieser Maßnahmen ergibt sich unabhängig von der Flächenpressung eine Abdichtung zwischen den Durchtrittsöffnungen und den Durchtrittsdichtungen. Ebenso wird ein Hineinragen der Durchtrittsdichtungen in den Aufnahmebereich der Batteriezellen und somit ein Abscheren oder Abreißen beim Fügevorgang der Batteriezellen vermieden. Besonders günstige Fertigungsbedingungen und eine hohe Dichtwirkung ergeben sich, wenn sowohl die Randdichtung als auch die Durchtrittsdichtungen als thermoplastisches Elastomer im Sinne einer Weichkomponente und die Aufnahmenut bzw. Stützkörper als Polyoxymethylen im Sinne einer Hartkomponente ausgebildet sind. Es kann zudem auch vorgesehen sein, dass die Hart- und Weichkomponente über eine zusätzlich gespritzte, haftvermittelnde Zwischenkomponente miteinander verbunden sind.

Um zur Verbesserung der Abdichtung punktuelle Belastungen der Dichtungen insbesondere für den Fall zusätzlicher Einbauten im Strömungskanal vermeiden zu können, wird vorgeschlagen, dass die Dichtelemente je einen Temperierfluidanschluss und einen dem Temperierfluidanschluss des jeweils punktsymmetrisch ausgerichteten anderen Dichtelementes gegenüberliegenden Strömungsteiler aufweisen. In Richtung der Fügeachsen verlaufende Temperierfluidanschlüsse haben den Vorteil, dass sich eine besonders kompakte Bauweise von aus einzelnen Batteriezellen aufgebauten Modulen und damit eine hohe Leistungsdichte ergibt, weil keine über den Querschnitt der Module in Richtung der Fügeachsen hinausragende Temperierfluidanschlüsse vorgesehen werden müssen und die Verbindungsleitungen zwischen den Modulen besonders kurzgehalten werden können. Erfindungsgemäß ergeben sich in diesem Zusammenhang besonders vorteilhafte Konstruktionsbedingungen, wenn die Temperierfluidanschlüsse weibliche Ansteckhülsen bilden, sodass zufolge der gleichteiligen Dichtelemente zwei aufeinanderfolgende Grundkörper über ein männliches, in die beiden Ansteckhülsen eingeführtes Verbindungsstück miteinander strömungsverbunden werden können. Bei höheren Strömungsgeschwindigkeiten entstehen allerdings im Strömungskanal sowie an den Temperierfluidanschlüssen Verwirbelungen und in Folge Staudrücke, darüber hinaus ist eine gleichmäßige Anströmung aller im Strömungskanal liegenden Batteriezellen nicht gewährleistet. Durch das erfindungsgemäße Vorsehen eines Strömungsteilers gegenüber des jeweiligen Temperierfluidanschlusses kann nicht nur eine möglichst verwirbelungsfreie Umlenkung des Temperierfluidstromes aus der Richtung der Fügeachsen in die Längsrichtung des Strömungskanals erfolgen, sondern auch der Fluidstrom insgesamt in mehrere Teilströme aufgeteilt werden, was das Auftreten von Druckspitzen im Bereich der Dichtungen vermeidet.

In diesem Zusammenhang können besonders vorteilhafte Strömungsbedingungen geschaffen werden, wenn der Strömungsteiler einen im Wesentlichen radial zu einer ersten an den Strömungsteiler angrenzenden Durchtrittsöffnung verlaufenden Hauptleitkamm aufweist. Dadurch wird der Temperierfluidstrom entlang der beiden Kammflanken aufgeteilt und umströmt die erste Batteriezelle bereits in zwei tangential zur Batteriezelle verlaufenden Teilströmen, was schädliche Druckspitzen in Folge eines sich radial zur ersten Batteriezelle ergebenden Staudrucks abbaut. In weiterer Folge können die erste, aber auch nachfolgende Zellen besser vom Temperierfluid umströmt werden. Zudem ergibt sich dadurch auch insofern eine bessere Dichtheit des Moduls, da sichergestellt wird, dass die Dichtungen nicht unnötig hohen Strömungsdrücken ausgesetzt sind.

Um auftretende Druckspitzen weiter zu reduzieren und insbesondere eine gleichmäßige Anströmung auch der am Rand des Strömungskanals liegenden Batteriezellen zu ermöglichen, wird vorgeschlagen, dass der Strömungsteiler zwei symmetrisch zum Hauptleitkamm und je im Wesentlichen radial zu einer an die erste Durchtrittsöffnung anschließenden Durchtrittsöffnung verlaufende Nebenleitkämme umfasst. Zufolge dieser Maßnahme bilden sich insgesamt vier Teilströme aus, von denen sich die randseitig liegenden an die Innenwand des Grundkörpers anlegen und die im Randbereich des Strömungskanals liegenden Batteriezellen tangential an ihren der Innenwand des Grundkörpers zugewandten Außenflächen umströmen. Zur weiteren Verringerung von Staudrücken kann sich der Scheitelgrat des Hauptleitkammes und / oder der Nebenleitkämme vom Temperierfluidanschlussbereich zu den angrenzenden Durchtrittsöffnungen hin verbreitern, weil lediglich beim direkten Auftreffen der Fluidströmung im Bereich des Temperierfluidanschlusses ein Aufspalten des Fluidstromes erforderlich ist, während in weiterer Folge die einzelnen Teilströme so weit voneinander getrennt werden sollen, dass sie die zu umspülenden Batteriezellen im Wesentlichen tangential anströmen. Es versteht sich von selbst, dass die Geometrien von sowohl Haupt- als auch Nebenkämmen im Zuge einer Strömungsoptimierung unterschiedlich ausgestaltet werden können bzw. noch zusätzliche Nebenkämme vorgesehen sein können.

### Kurze Beschreibung der Erfindung

In der Zeichnung ist der Erfindungsgegenstand beispielsweise dargestellt. Es zeigen
- Fig. 1: eine schematische Darstellung einer erfindungsgemäßen Temperiervorrichtung,
- Fig. 2: eine schematische Seitenansicht eines assemblierten Moduls in einem größeren Maßstab,
- Fig. 3: eine vergrößerte Detailansicht der Fig. 1 mit nicht zusammengefügten Dichtelementen,
- Fig. 4: eine weitere vergrößerte Detailansicht der Fig. 1 mit zusammengefügten Dichtelementen und
- Fig. 5: eine vergrößerte Detailansicht eines in der Fig. 1 gezeigten Strömungsteilers.

### Wege zur Ausführung der Erfindung

Eine erfindungsgemäße Temperiervorrichtung für einzelne, zu einem Modul 1 zusammengesetzte Batteriezellen 2 umfasst einen Grundkörper 3 mit zwei gegenüberliegenden Dichtelementen 4,5. Zum umfangsseitigen Umschließen der Batteriezellen 2 weisen die Dichtelemente 4,5 bezüglich je einer Fügeachse paarweise gegenüberliegende Durchtrittsöffnungen 6 auf. Der Grundkörper 3 bildet einen quer zu den Fügeachsen verlaufenden Strömungskanal für ein Temperierfluid zur Temperierung der Batteriezellen 2. Die Dichtelemente 4,5 sind als zwei, beispielsweise spritzgegossene Gleichteile ausgebildet. Beim Zusammenfügen werden sie punktsymmetrisch zueinander ausgerichtet, über je eine umlaufende Auflagefläche 7 miteinander verbunden und bilden so den Grundkörper 3.

Grundkörperinnenseitig schließt eine, einen Dichtungsausgleichsbereich 8 aufweisende Aufnahmenut 9 an die Auflagefläche 7 an. In die jeweilige Aufnahmenut 9 der Dichtelemente 4,5 ist eine umlaufende Randdichtung 10 eingesetzt. Besonders günstige Fertigungsbedingungen sowie eine gute Abdichtung zwischen der Randdichtung 10 und der Aufnahmenut 9 ergeben sich, wenn die Randdichtung 10 mit der Aufnahmenut 9 im Mehrkomponenten-Spritzgussverfahren verbunden ist, wobei die Randdichtung 10 eine Weichkomponente beispielsweise in Form eines thermoplastischen Elastomers und die Aufnahmenut 9 eine Hartkomponente in Form von beispielsweise Polyoxymethylen darstellen.

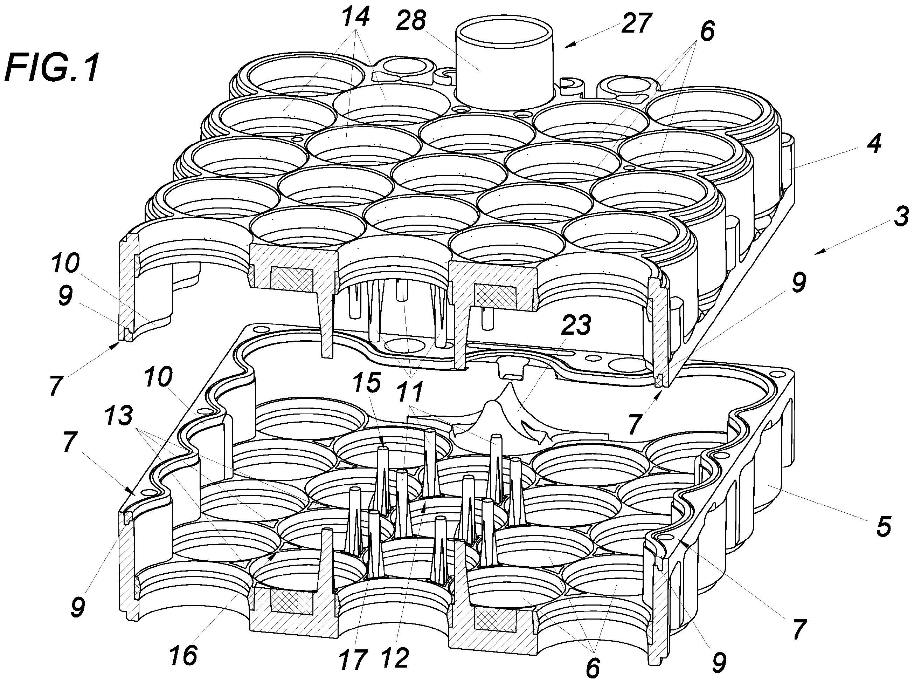

Die Dichtelemente 4,5 weisen zudem je zwischen drei aneinandergrenzenden Durchtrittsöffnungen 6 grundkörperinnenseitig vorragende und in Richtung der Fügeachsen verlaufende Stützstifte 11 auf, die im Übergangsbereich 12 zu den Durchtrittsöffnungen 6 einen Stützkörper 13 für die in Umfangsrichtung der Durchtrittsöffnungen 6 verlaufenden Durchtrittsdichtungen 14 bilden. Im assemblierten Zustand liegen die Stützstifte 11 mit ihren jeweiligen Kontaktflächen 15 aufeinander auf. Die Stützkörper 13 können überdies auch in den stützstiftfreien Übergangsbereichen 16 vorgesehen sein. Wie in der Fig. 1 zu erkennen ist, können die Stützstifte 11 zur besseren Druckverteilung auf den Übergangsbereich 12 durch jeweils drei hin zu diesem verlaufende Stege 17 verstärkt sein. Analog zur Randdichtung 10 und der Aufnahmenut 9 können auch die Durchtrittsdichtungen 14 mit den Stützkörpern 13 im Mehrkomponenten-Spritzgussverfahren verbunden sein.

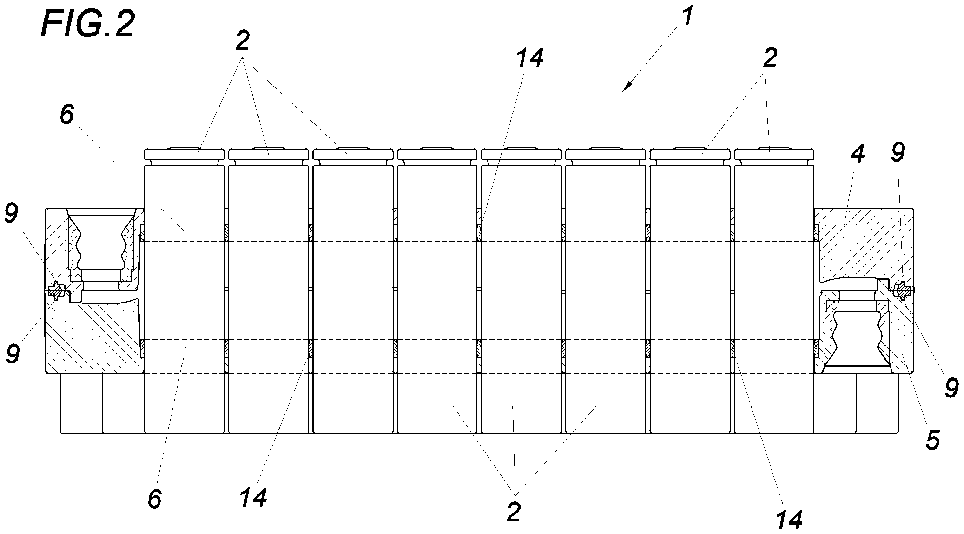

Fig. 2 zeigt ein assembliertes Modul 1 mit durch die Durchtrittsöffnung 6 gefügten und umfangsseitig von den Durchtrittsdichtungen 14 umschlossenen Batteriezellen 2.

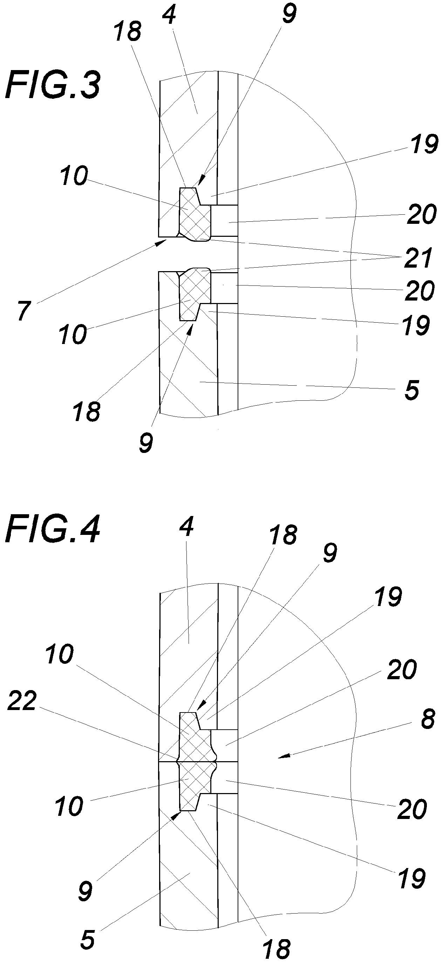

Wie insbesondere in der Fig. 3 und 4 zu erkennen ist, weist die Aufnahmenut 9 eine gegenüber dem Nutgrund 18 hervortretende Positionierstufe 19 für eine Randdichtung 10 auf. Dabei bildet der oberhalb der Positionierstufe 19 freibleibende Nutbereich 20 den Dichtungsausgleichsbereich 8. Beim Zusammenfügen der beiden Dichtelemente 4,5 kann ein Teil der aufeinander zu liegen kommenden und sich zufolge der erforderlichen Flächenpressung elastisch verformenden Randdichtungen 10 in den Dichtungsausgleichsbereich 8 ausweichen, wie dies in Fig. 4 dargestellt wird. Die Randdichtung 10 kann zudem einen zur Auflagefläche 7 hin unter diese abfallenden Dichtwulst 21 aufweisen, sodass sich ein zweiter, grundkörperaußenseitig an die Aufnahmenut 9 anschließender Dichtungsausgleichsbereich 22 bildet.

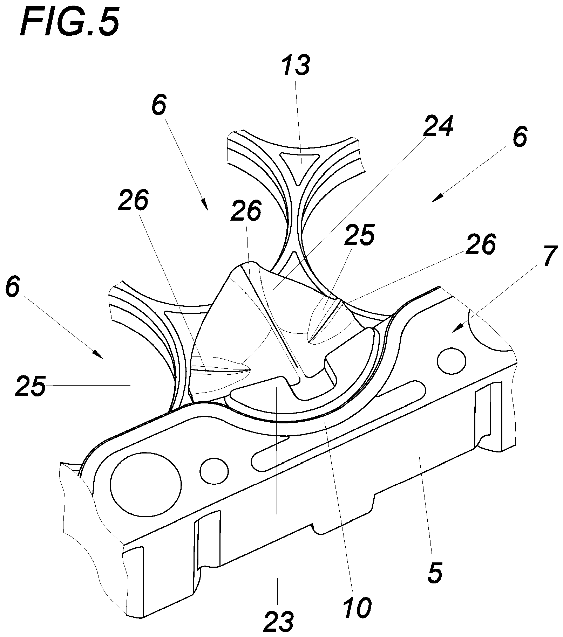

Fig. 5 stellt eine Detailansicht eines erfindungsgemäßen, in Fig. 1 gezeigten Strömungsteilers 23 in einem Dichtelement 4 dar. Dabei umfasst der Strömungsteiler 23 einen Hauptleitkamm 24 sowie Nebenleitkämme 25. Sowohl der Hauptleitkamm 24 als auch die Nebenleitkämme 25 weisen jeweils einen sich zu den angrenzenden Durchtrittsöffnungen 6 verbreiternden Scheitelgrat 26 auf. In der Fig. 1 ist zudem zu erkennen, dass der Kammquerschnitt sowohl des Hauptleitkammes 24 als auch der Nebenleitkämme 25 in Richtung der jeweils angrenzenden Durchtrittsöffnungen 6 zunimmt. Die Dichtelemente 4,5 weisen außerdem je einen Temperierfluidanschluss 27 auf, sodass im zusammengefügten Zustand jeweils ein Temperierfluidanschluss 27 des einen Dichtelementes 4 dem Strömungsteiler 23 des anderen Dichtelementes 5 gegenüberliegt.

Die Temperierfluidanschlüsse 27 können weibliche Ansteckhülsen 28 bilden, sodass zufolge der gleichteiligen Dichtelemente 4,5 zwei aufeinanderfolgende Grundkörper über ein männliches, in die beiden Ansteckhülsen 28 eingeführtes Verbindungsstück miteinander strömungsverbunden werden können

## Patentansprüche

1. Temperiervorrichtung für einzelne, zu einem Modul (1) zusammengesetzte Batteriezellen (2), mit einem Grundkörper (3), der zum umfangsseitigen Umschlie-ßen der Batteriezellen (2) zwei gegenüberliegende, bezüglich je einer Fügeachse paarweise gegenüberliegende Durchtrittsöffnungen (6) aufweisende Dichtelemente (4, 5) umfasst und einen quer zu den Fügeachsen verlaufenden Strömungskanal für ein Temperierfluid bildet, **dadurch gekennzeichnet, dass** die Dichtelemente (4, 5) zwei einander gleichende Formteile sind, die punktsymmetrisch zueinander ausgerichtet und über je eine Auflagefläche (7) miteinander verbunden den Grundkörper (3) bilden, wobei an die Auflagefläche (7) grundkörperinnenseitig eine, einen Dichtungsausgleichsbereich (8) aufweisende Aufnahmenut (9) anschließt.

2. Temperiervorrichtung nach Anspruch 1, **dadurch gekennzeichnet, dass** die Aufnahmenut (9) eine gegenüber dem Nutgrund (18) hervortretende Positionierstufe (19) für eine Randdichtung (10) aufweist und dass der oberhalb der Positionierstufe (19) freibleibende Nutbereich (20) den Dichtungsausgleichsbereich (8) bildet.

3. Temperiervorrichtung nach Anspruch 1 oder 2, **dadurch gekennzeichnet, dass** eine Randdichtung (10) einen, zur Auflagefläche (7) hin unter diese abfallenden Dichtwulst (21) aufweist.

4. Temperiervorrichtung nach einem der Ansprüche 1 bis 3, **dadurch gekennzeichnet, dass** die Dichtelemente (4, 5) je zwischen drei aneinandergrenzenden Durchtrittsöffnungen (6) grundkörperinnenseitig vorragende und in Richtung der Fügeachsen verlaufende Stützstifte (11) aufweisen, die im Übergangsbereich (12) zu den Durchtrittsöffnungen (6) einen Stützkörper (13) für die in Umfangsrichtung der Durchtrittsöffnungen (6) verlaufenden Durchtrittsdichtungen (14) bilden.

5. Temperiervorrichtung nach einem der Ansprüche 1 bis 4, **dadurch gekennzeichnet, dass** eine Randdichtung (10) mit der Aufnahmenut (9) im Mehrkomponenten-Spritzgussverfahren verbunden ist.

6. Temperiervorrichtung nach Anspruch 4 oder 5, **dadurch gekennzeichnet, dass** die Durchtrittsdichtungen (14) mit den Stützkörpern (13) im Mehrkomponenten-Spritzgussverfahren verbunden sind.

7. Temperiervorrichtung nach einem der Ansprüche 1 bis 6, **dadurch gekennzeichnet, dass** die Dichtelemente (4, 5) je einen Temperierfluidanschluss (27) und einen dem Temperierfluidanschluss (27) des jeweils punktsymmetrisch ausgerichteten anderen Dichtelementes (5) gegenüberliegenden Strömungsteiler (23) aufweisen.

8. Temperiervorrichtung nach Anspruch 7, **dadurch gekennzeichnet, dass** der Strömungsteiler (23) einen im Wesentlichen radial zu einer ersten an den Strömungsteiler (23) angrenzenden Durchtrittsöffnung (6) verlaufenden Hauptleitkamm (24) aufweist.

9. Temperiervorrichtung nach Anspruch 8, **dadurch gekennzeichnet, dass** der Strömungsteiler (23) zwei symmetrisch zum Hauptleitkamm (24) und je im Wesentlichen radial zu einer an die erste Durchtrittsöffnung (6) anschließenden Durchtrittsöffnung (6) verlaufende Nebenleitkämme (25) umfasst.

## Claims

1. Temperature control device for individual battery cells (2) assembled to form a module (1), having a base body (3) which, for the purpose of circumferentially enclosing the battery cells (2), comprises two opposing sealing elements (4, 5) having passage openings (6) located opposite one another in pairs with respect to a respective joining axis, and which base body (3) forms a flow channel extending transversely to the joining axes for a temperature control fluid, **characterized in that** the sealing elements (4, 5) are two moulded parts which are identical to one another and which are aligned point-symmetrically with respect to one another and connected to one another and which sealing elements (4, 5) form via a respective bearing surface (7) the base body (3), wherein a receiving groove (9) having a seal compensation region (8) adjoins the bearing surface (7) on the inside of the base body (3).

2. Temperature control device according to claim 1, **characterized in that** the receiving groove (9) has a positioning step (19) for an edge seal (10), which positioning step (19) protrudes relative to the groove base (18), and **in that** the groove region (20) remaining free above the positioning step (19) forms the seal compensation region (8).

3. Temperature control device according to claim 1 or 2, **characterized in that** an edge seal (10) has a sealing bead (21) which slopes down towards the bearing surface (7) and underneath it.

4. Temperature control device according to one of claims 1 to 3, **characterized in that** the sealing elements (4, 5) each have supporting pins (11) projecting on the inside of the base body (3) between three adjacent passage openings (6) and extending in the direction of the joining axes, which supporting pins (11) form a supporting body (13) in the transition region (12) to the passage openings (6) for the passage seals (14) extending in the circumferential direction of the passage openings (6).

5. Temperature control device according to one of claims 1 to 4, **characterized in that** an edge seal (10) is connected to the receiving groove (9) in a multi-component injection moulding process.

6. Temperature control device according to claim 4 or 5, **characterized in that** the passage seals (14) are connected to the supporting bodies (13) by means of a multi-component injection molding process.

7. Temperature control device according to one of claims 1 to 6, **characterized in that** the sealing elements (4, 5) each have a temperature control fluid connection (27) and a flow divider (23), wherein the flow divider (23) is opposite the temperature control fluid connection (27) of the respective other sealing element (5), which is aligned in a point-symmetrically manner.

8. Temperature control device according to claim 7, **characterized in that** the flow divider (23) has a main guide ridge (24) extending substantially radially to a first passage opening (6) adjacent to the flow divider (23).

9. Temperature control device according to claim 8, **characterized in that** the flow divider (23) comprises two secondary guide ridges (25) extending symmetrically to the main guide ridge (24) and each substantially radially to a passage opening (6) adjoining the first passage opening (6).

## Revendications

1. Dispositif de régulation de température destiné à des éléments de batterie (2) individuels assemblés pour former un module (1), comprenant un corps de base (3) qui, pour entourer de manière circonférentielle les cellules de batterie (2), comporte deux éléments d'étanchéité (4, 5) opposés entre eux présentant des ouvertures de passage (6) opposées par paire par rapport à un axe d'assemblage, et forme un canal d'écoulement (5) courant transversalement aux axes d'assemblage pour un fluide de régulation de température, **caractérisé en ce que** les éléments d'étanchéité (4, 5) sont deux pièces moulées identiques entre elles qui sont orientées en symétrie ponctuelle entre elles et présentent chacune une surface portante (7), lesquelles surfaces portantes sont reliées entre elles et forment le corps de base (3), une rainure de réception (9) présentant une zone de compensation d'étanchéité de (8) se raccordant à la surface portante (7) sur la face intérieure du corps de base.

2. Dispositif de régulation de température selon la revendication 1, **caractérisé en ce que** la rainure de réception (9) présente un épaulement de positionnement (19) faisant saillie en face du fond de rainure (18) pour un joint périphérique (10) et que la zone de rainure (20) restant libre au-dessus de l'épaulement de positionnement (19) forme la zone de compensation d'étanchéité (8).

3. Dispositif de régulation de température selon la revendication 1 ou 2, **caractérisé en ce qu'**un joint périphérique (10) comporte un bourrelet d'étanchéité (21) descendant en direction de la surface portante (7) au-dessous de celle-ci.

4. Dispositif de régulation de température selon une des revendications 1 à 3, **caractérisé en ce que** les éléments d'étanchéité (4, 5) comportent des plots d'appui (11) faisant saillie chacun, sur la face intérieure du corps de base, entre trois ouvertures de passage (6) contigües et courant en direction des axes d'assemblage, qui forment dans la zone de transition (12) avec les ouvertures de passage (6) un corps d'appui (13) pour les joints de passage (14) courant dans la direction périphérique des ouvertures de passage (6).

5. Dispositif de régulation de température selon une des revendications 1 à 4, **caractérisé en ce qu'**un joint périphérique (10) est relié à la rainure de réception (9) par un procédé de moulage par injection à plusieurs composants.

6. Dispositif de régulation de température selon la revendication 4 ou 5, **caractérisé en ce que** les joints de passage (14) sont reliés aux corps d'appui (13) par un procédé de moulage par injection à plusieurs composants.

7. Dispositif de régulation de température selon une des revendications 1 à 6, **caractérisé en ce que** les éléments d'étanchéité (4, 5) comportent chacun un raccord de fluide de régulation de température (27) et un diviseur de flux (23) opposé au raccord de fluide de régulation de température (27) de l'autre élément d'étanchéité (5) orienté en symétrie ponctuelle.

8. Dispositif de régulation de température selon la revendication 7, **caractérisé en ce que** le diviseur de flux (23) présente une crête de guidage principale (24) courant radialement par rapport à une première ouverture de passage (6) voisine du diviseur de flux (23).

9. Dispositif de régulation de température selon la revendication 8, **caractérisé en ce que** le diviseur de flux (23) comporte deux crêtes de guidage annexes (25) courant symétriquement par rapport à la crête de guidage principale (24) et chacune sensiblement radialement par rapport à une ouverture de passage (6) contigüe à la première ouverture de passage (6).
